# EUROPÄISCHE PATENTSCHRIFT

(11) **EP 3 482 480 B1**
(45) Veröffentlichungstag und Bekanntmachung des Hinweises auf die Patenterteilung: **14.02.2024**
(21) Anmeldenummer: 17735524.5
(22) Anmeldetag: 05.07.2017
(51) Int. Cl.: H02K 5/26, B60N 2/02, B60N 2/06

(54) **BEFESTIGUNGSANORDNUNG EINES ELEKTROMOTORS UND SITZ**
FASTENING ARRANGEMENT OF AN ELECTRIC MOTOR AND SEAT
DISPOSITIF DE FIXATION D'UN MOTEUR ÉLECTRIQUE ET SIÈGE

(30) Priorität: 05.07.2016 DE 102016212257; 19.08.2016 DE 102016215571
(43) Veröffentlichungstag der Anmeldung: 15.05.2019
(73) Patentinhaber: KEIPER Seating Mechanisms Co., Ltd., Shanghai 201315 (CN)
(72) Erfinder: HOFFMANN, Andreas, 42489 Wülfrath (DE); KRETSCHMANN, Stefanie, 42349 Wuppertal (DE); POCZIK, Tamas, 50733 Köln (DE); SCHÜRMANN, Thorsten, 51519 Odenthal (DE)
(74) Vertreter: Kutzenberger Wolff & Partner
(86) Internationale Anmeldenummer: PCT/EP2017/066766
(87) Internationale Veröffentlichungsnummer: WO 2018/007440

(56) Entgegenhaltungen:
- DE-U1- 8 808 854
- DE-U1-202008 005 744
- FR-A1- 2 883 810
- GB-A- 2 033 672
- US-A- 2 885 142
- US-A- 3 983 429
- US-A1- 2001 048 058
- US-A1- 2013 015 313

## Beschreibung

Die Erfindung betrifft einen Elektromotor mit einer Befestigungsanordnung, insbesondere zur Befestigung des Elektromotors an einem Sitz. Die Erfindung betrifft weiterhin einen Sitz mit einem solchen Elektromotor.

Sitze, insbesondere Fahrzeugsitze, sind längs-, höhen- und neigungsverstellbar. Die Verstellung einer Position des Sitzes kann manuell beispielsweise mittels eines Hebels und/oder eines Griffs oder elektrisch mittels eines Elektromotors erfolgen, welcher über ein Bedienelement betätigbar ist. Mittels einer bestimmten Befestigungsanordnung kann der Elektromotor am Sitz befestigt werden. Beispielsweise umfasst die Befestigungsanordnung zur Fixierung des Elektromotors Befestigungslaschen am Elektromotor, die mit Befestigungsstiften am Sitz korrespondieren.

Aus DE 20 2008 005 744 U1 sind ein Elektromotor und ein Bürstenträger bekannt. Der Bürstenträger weist sechs im Wesentlichen röhrenförmige Schraubenöffnungen auf.

In US 3 983 429 A ist ein eine einstellbare Motorhalterung offenbart, die zwei ineinandergreifende Grundplatten sowie zwei nach oben gebogene Bügel aufweist, die an axial vorstehenden, endseitigen Glockennabenabschnitten eines Motors anordenbar sind. Die ineinandergreifenden Grundplatten sind verschiebbar zueinander angeordnet und können axial eingestellt werden, um Motoren mit unterschiedlichen axialen Längen aufzunehmen.

GB 2 033 672 A offenbart eine elektrische Maschine mit einem Gehäuse, welches eine Gehäuseschale und ein an zumindest einem Ende der Gehäuseschale befestigtes Lagerschild aufweist. Das Gehäuse weist weiterhin einen Schwenkarm, welcher Bestandteil der Gehäuseschale ist, und einen Aussteifungsarm auf, welcher eine Komponente des Lagerschilds ist. Ferner umfasst die elektrische Maschine einen in der Gehäuseschale angeordneten Stator und einen in dem Lagerschild gelagerten Rotor.

Des Weiteren ist aus US 2001/048058 A1 eine motorisch angetriebene Verstellvorrichtung für einen Fahrzeugsitz offenbart. Die Verstellvorrichtung umfasst einen Motor mit einem Gehäuse, welches zwei überstehende Endstücke und eine Auflage aufweist, an der das Gehäuse des Motors befestigt ist. Die beiden Endstücke des Gehäuses sind in viskoelastischen Hülsen aufgenommen, die jeweils elastisch in Halterungen angeordnet sind, wobei die Halterungen zur Abstützung des Gehäuses gegen Rotation ausgebildet sind. Weitere Fahrzeugsitze mit einem elektromotorischen Verstellmechanismus werden beispielsweise in FR 2 883 810 A1 und US 2013/015313 A1 offenbart.

Der Erfindung liegt die Aufgabe zu Grunde, einen gegenüber dem Stand der Technik verbesserten Elektromotor mit einer Befestigungsanordnung, insbesondere zur Befestigung des Elektromotors an einem Sitz, sowie einen verbesserten Sitz mit einem solchen Elektromotor anzugeben.

Hinsichtlich des Elektromotors mit einer Befestigungsanordnung wird die Aufgabe erfindungsgemäß mit den in Anspruch 1 angegebenen Merkmalen gelöst. Hinsichtlich des Sitzes wird die Aufgabe erfindungsgemäß mit den in Anspruch 7 angegebenen Merkmalen gelöst.

Vorteilhafte Ausgestaltungen der Erfindung sind Gegenstand der Unteransprüche.

Ein erfindungsgemäßer Elektromotor mit einer Befestigungsanordnung, insbesondere zur Befestigung des Elektromotors an einem Sitz, umfasst mindestens ein Motorfixierelement und mindestens ein Motorarretierelement, die jeweils am Elektromotor angeordnet sind. Das mindestens eine Motorfixierelement ist derart ausgebildet, dass der Elektromotor in eine Drehposition stellbar, insbesondere vorpositionier- oder vorfixierbar, ist. Das mindestens eine Motorarretierelement ist derart ausgebildet, dass der Elektromotor in einer eingestellten Drehposition arretierbar ist, wobei das Motorarretierelement derart ausgebildet ist, dass der Elektromotor in axialer Richtung unverschiebbar festlegbar und mittels einer Drehmomentsperre gegen Verdrehung sicherbar ist, wobei das mindestens eine Motorarretierelement ein Polygonalprofil aufweist, wobei das Außenprofil des Motorarretierelements mehrere über den Umfang gleichmäßig verteilte Flächen aufweist, die die Form eines Polygons bilden, wobei sich das Motorfixierelement in axialer Richtung nach außen ausgehend vom Motorarretierelement erstreckt und wobei das Motorfixierelement eine Steckverbindung des Elektromotors ermöglicht und das Außenprofil des Motorarretierelements die Drehmomentsperre bildet.

Mittels der derart ausgebildeten Befestigungsanordnung ist eine flexible Anordnung des Elektromotors relativ zum Sitz möglich, wobei gleichzeitig eine Drehmomentsperre mit einem verringerten Bauraumbedarf ermöglicht wird. Dadurch, dass der Elektromotor in verschiedenen Drehpositionen relativ zum Sitz befestigbar ist, kann eine Position eines elektrischen Anschlusses des Elektromotors im Bauraum des Sitzes flexibel gewählt werden. Dies ermöglicht eine Verwendung von Elektromotoren mit einer weitestgehend einheitlichen Position des elektrischen Anschlusses am Umfang des Elektromotors.

Gemäß einem Ausführungsbeispiel sind das mindestens eine Motorfixierelement und das Motorarretierelement an einer Stirnseite des Elektromotors angeordnet.

Bevorzugt sind das mindestens eine Motorfixierelement und das Motorarretierelement koaxial zueinander angeordnet. Insbesondere sind das Motorfixierelement und das Motorarretierelement koaxial zu einer Motorachse des Elektromotors angeordnet, wobei das Motorfixierelement vom Motorarretierelement in radialer Richtung nach außen umgeben wird und koaxial zu diesem angeordnet ist.

Ferner können das Motorarretierelement und das mindestens eine Motorfixierelement beispielsweise axial versetzt zueinander angeordnet sein. Insbesondere erstreckt sich das Motorfixierelement in axialer Richtung nach außen ausgehend vom Motorarretierelement. Das Motorfixierelement ermöglicht somit eine Steckverbindung des Elektromotors und das Motorarretierelement eine Drehmomentsperre des Elektromotors.

Darüber hinaus ist das Motorarretierelement bevorzugt derart ausgebildet, dass der Elektromotor in axialer Richtung unverschiebbar festgelegt und mittels einer Drehmomentsperre gegen Verdrehung gesichert ist.

Das Außenprofil des Motorarretierelements weist erfindungsgemäß mehrere über den Umfang gleichmäßig verteilte Flächen in Form eines Polygons auf und bildet damit eine Drehmomentsperre.

Weiterhin ist das Motorfixierelement bevorzugt derart ausgebildet, dass der Elektromotor in axialer Richtung unverschiebbar festgelegt und in eine von mehreren Drehpositionen, insbesondere gestuft stellbar ist.

Gemäß einem Ausführungsbeispiel ist das mindestens eine Motorarretierelement als eine stirnseitig am Elektromotor angeordnete und axial von einem Lagerschild eines Elektromotorgehäuses abragende Ausformung ausgebildet. Das Motorarretierelement kann dabei einteilig mit dem Lagerschild ausgebildet sein. Alternativ kann das Motorarretierelement auch als eine separate Komponente ausgebildet sein, die mit dem Lagerschild verbunden ist, z. B. mittels Stoffschluss. Das Lagerschild bildet ein stirnseitiges Ende des Elektromotorgehäuses und ist somit als eine Art Gehäusedeckel zu verstehen, wobei das Lagerschild entweder eine separate Komponente darstellt oder einteilig mit dem Elektromotorgehäuse ausgebildet ist, beispielsweise mittels Tiefziehen. Üblicherweise ist das Elektromotorgehäuse mit zwei Lagerschilden versehen, so dass das Elektromotorgehäuse jeweils stirnseitig mit einem Lagerschild versehen ist.

Das Motorarretierelement weist erfindungsgemäß das Polygonalprofil auf und ist mit der korrespondierenden Arretierkomponente am Sitz verbindbar. Insbesondere weist das Polygonalprofil mindestens vier Funktionsflächen, idealerweise sechs oder mehr Funktionsflächen auf, so dass das Polygonalprofil beispielsweise als ein äußeres Hexagonalprofil, Oktagonalprofil oder Dekagonalprofil ausgebildet sein kann. Mittels des Polygonalprofils sind mehrere Drehpositionen des Elektromotors und somit eines elektrischen Anschlusses des Elektromotors relativ zum Sitz möglich, wobei eine rotatorische Stufung der Drehposition des elektrischen Anschlusses in Einbaulage des Elektromotors vorzugweise maximal 60° beträgt. D. h., im konkreten Fall eines hexagonalen Profils des Motorarretierelements kann der Elektromotor und damit der elektrische Anschluss in sechs verschiedenen Drehpositionen relativ zum Sitz angeordnet werden, wobei die Drehpositionen in Bezug auf eine Rotationsachse des Elektromotors jeweils in einem Winkel von 60° zueinander versetzt sind.

Beispielsweise ist die korrespondierende Arretierkomponente als eine Aussparung im Sitz ausgebildet, die ein mit dem Polygonalprofil des mindestens einen Motorarretierelements korrespondierendes Polygonalprofil, insbesondere ein inneres Polygonalprofil, aufweist. Damit ist das Motorarretierelement in der Arretierkomponente formschlüssig, insbesondere passgenau, und aufgrund des Polygonalprofils arretierend anordenbar. Eine Drehung des Elektromotorgehäuses ist damit nicht mehr möglich, so dass eine Drehmomentsperre des Elektromotors ohne zusätzliche Befestigungselemente möglich ist.

Gemäß einem weiteren Ausführungsbeispiel sind zwei Motorfixierelemente vorgesehen, mittels denen der Elektromotor am Sitz fixierbar ist.

Beispielsweise ist der Elektromotor mittels eines an einer Abtriebsseite des Elektromotors angeordneten Motorfixierelements über eine form- und reibschlüssige Verbindung, insbesondere über eine Klemmverbindung, am Sitz fixierbar. Die korrespondierende Fixierkomponente umfasst dazu beispielsweise eine Klemmöffnung.

Mittels des anderen Motorfixierelements, welches auf einer anderen Abtriebsseite des Elektromotors angeordnet ist, ist der Elektromotor über eine formschlüssige Verbindung am Sitz fixierbar. Beispielsweise umfasst der Sitz dazu eine korrespondierende Aussparung, in welcher das Motorfixierelement formschlüssig anordenbar ist. Das Motorarretierelement und das Motorfixierelement sind somit an einem gemeinsamen stirnseitigen Ende des Elektromotors angeordnet, sind jedoch auf verschiedenen Schnittebenen durch eine Rotationsachse des Elektromotors angeordnet.

Gemäß einem Ausführungsbeispiel sind die Motorfixierelemente jeweils mittels eines durch ein Lagerschild hindurchgeführten, axial nach außen ragenden Lagerzapfens des Elektromotors gebildet, wobei die Lagerzapfen jeweils koaxial zur Rotationsachse des Elektromotors angeordnet sind.

Die Erfindung betrifft weiterhin einen Sitz mit einem Elektromotor und einer Befestigungsanordnung nach vorheriger Beschreibung, wobei die Befestigungsanordnung mindestens ein Motorfixierelement und mindestens ein Motorarretierelement umfasst, wobei das mindestens eine Motorfixierelement derart ausgebildet ist, dass der Elektromotor in eine Drehposition stellbar ist, und das mindestens eine Motorarretierelement derart ausgebildet ist, dass der Elektromotor in einer eingestellten Drehposition arretierbar ist, wobei das Motorarretierelement derart ausgebildet ist, dass der Elektromotor in axialer Richtung unverschiebbar festgelegt und mittels einer Drehmomentsperre gegen Verdrehung gesichert ist, wobei das mindestens eine Motorarretierelement ein Polygonalprofil aufweist, wobei das Außenprofil des Motorarretierelements mehrere über den Umfang gleichmäßig verteilte Flächen aufweist, die die Form eines Polygons bilden.

Des Weiteren umfasst die Befestigungsanordnung mindestens eine zum Motorfixierelement korrespondierende Fixierkomponente und mindestens eine zum Motorarretierelement korrespondierende Arretierkomponente, wobei die Fixierkomponente und die Arretierkomponente jeweils am Sitz angeordnet sind, und wobei der Elektromotor mittels des mindestens einen Motorarretierelements und der mindestens einen korrespondierenden Arretierkomponente hinsichtlich einer Drehposition des Elektromotors flexibel relativ zum Sitz anordenbar und in der eingestellten Drehposition arretierbar ist.

Gemäß einem Ausführungsbeispiel ist der Elektromotor mittels eines an einer Abtriebsseite des Elektromotors angeordneten Motorfixierelements über eine form- oder reibschlüssige Verbindung am Sitz fixierbar.

Des Weiteren ist der Elektromotor zusätzlich mittels eines an einer anderen Abtriebsseite des Elektromotors angeordneten Motorfixierelements über eine formschlüssige Verbindung am Sitz fixierbar.

Die Befestigungsanordnung eignet sich insbesondere für einen Längsversteller eines Sitzes, wobei gemäß einem Ausführungsbeispiel die mindestens eine Fixierkomponente und die mindestens eine Arretierkomponente an einem Trägerelement einer Längsverstellereinheit des Sitzes angeordnet sind.

Ausführungsbeispiele der Erfindung werden anhand von Zeichnungen näher erläutert. Dabei zeigen:
- Figur 1: schematisch eine Draufsicht auf ein Trägerelement einer Längsverstellereinheit eines Sitzes mit einem Elektromotor im verbundenen Zustand gemäß dem Stand der Technik,
- Figur 2: schematische eine perspektivische Ansicht eines Ausschnitts mit dem Trägerelement und dem Elektromotor im verbundenen Zustand gemäß dem Stand der Technik,
- Figur 3: schematisch eine perspektivische Ansicht eines Ausschnitts mit dem Trägerelement und dem Elektromotor gemäß Figur 1 und 2 im nicht verbundenen Zustand,
- Figur 4: schematisch eine perspektivische Einzelansicht eines Ausführungsbeispiels eines Elektromotors mit einem ein Polygonalprofil aufweisendes Motorarretierelement,
- Figur 5: schematisch eine Vorderansicht des Elektromotors mit dem Polygonalprofil,
- Figur 6: schematisch eine weitere perspektivische Einzelansicht des Elektromotors,
- Figur 7: schematisch eine Draufsicht auf einen Ausschnitt mit einem Trägerelement und dem Elektromotor im verbundenen Zustand,
- Figuren 8 bis 10: schematisch Schnittdarstellungen des Ausschnitts gemäß Figur 7,
- Figur 11: schematisch eine Schnittdarstellung des Trägerelements und des Elektromotors im verbundenen Zustand,
- Figur 12: schematisch eine perspektivische Ansicht des Trägerelements und des Elektromotors während einer Montage,
- Figur 13: schematisch eine perspektivische Ansicht des Trägerelements und des Elektromotors nach der Montage,
- Figur 14: schematisch eine perspektivische Ansicht eines Ausschnitts mit dem Trägerelement und dem Elektromotor im nicht verbundenen Zustand,
- Figur 15: schematisch eine perspektivische Ansicht einer Längsverstellereinheit mit dem Trägerelement, dem Elektromotor und einer Oberschiene eines Sitzes und
- Figur 16: schematisch ein Sitz mit einer Längsverstellereinheit.

Einander entsprechende Teile sind in allen Figuren mit den gleichen Bezugszeichen versehen.

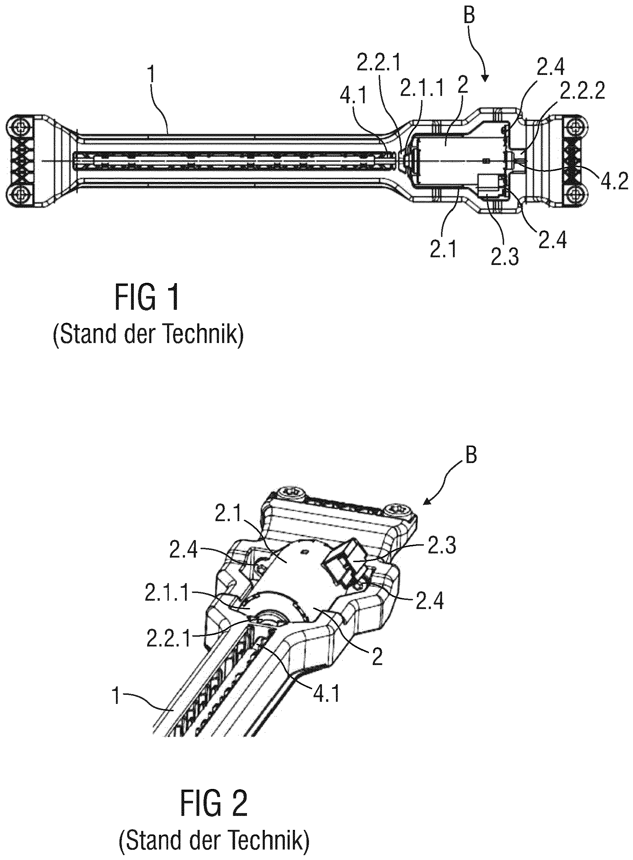

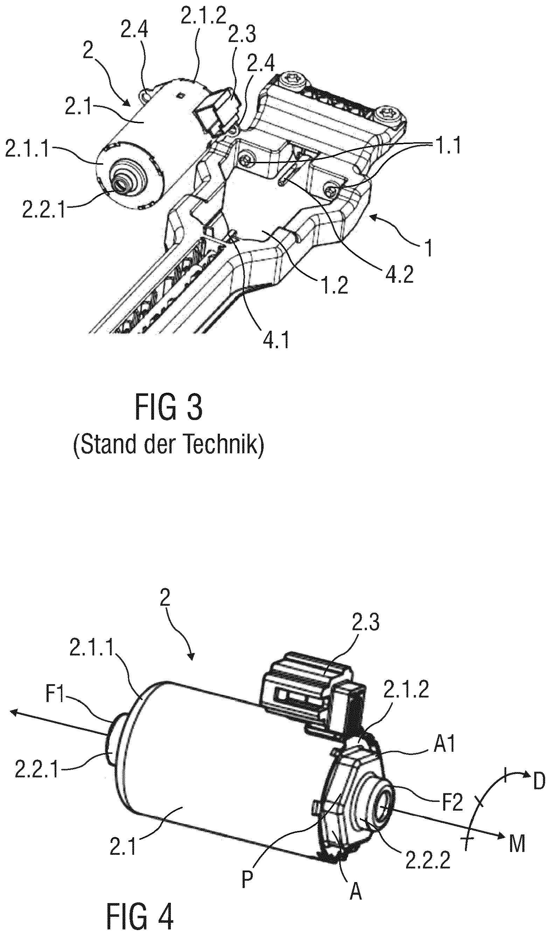

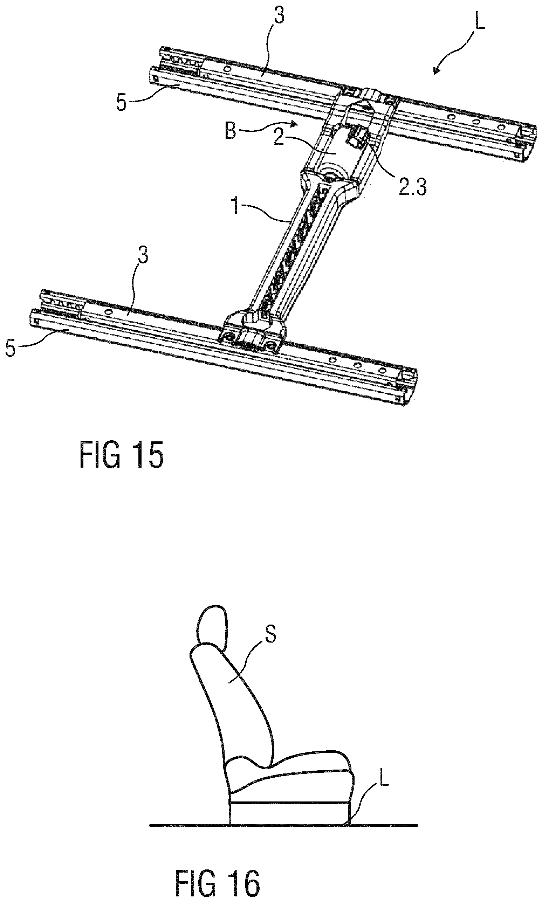

**Figur 1** zeigt in Draufsicht ein Trägerelement 1 einer Längsverstellereinheit L (siehe Figur 15) eines in Figur 16 dargestellten Sitzes S, beispielsweise eines Fahrzeugsitzes, mit einem Elektromotor 2 und eine Befestigungsanordnung B für den Elektromotor 2 gemäß dem Stand der Technik. **Figur 2** zeigt perspektivisch einen Ausschnitt mit dem Trägerelement 1 und dem Elektromotor 2 und der Befestigungsanordnung B gemäß dem Stand der Technik. **Figur 3** zeigt perspektivisch einen Ausschnitt mit dem Trägerelement 1 und dem Elektromotor 2 gemäß Figur 1 und 2 im nicht verbundenen Zustand.

Das Trägerelement 1 ist beispielsweise aus Kunststoff gefertigt und mit einem Sitzteil, insbesondere mit einer mit dem Sitzteil verbundenen Oberschiene 3 (siehe Figur 15), verbunden, mittels der das Sitzteil entlang einer an einem Fahrzeugboden befestigten Unterschiene 5 (siehe Figur 15) längsverschiebbar ist.

Zur Ausführung der Längsbewegung ist beispielsweise beiden Oberschienen 3 des Sitzes S ein Elektromotor 2 zugeordnet, welcher die Oberschienen 3 antreibt und relativ zur Unterschiene 5 längs bewegbar ist. Zur Übertragung motorischer Antriebsbewegungen des Elektromotors 2 auf die Oberschienen 3 können in bekannter Weise Getriebe vorgesehen sein. In den Figuren 1 bis 3 sind dazu beispielhaft zwei Wellen 4.1, 4.2 dargestellt, die mit dem Elektromotor 2 und mit einer nicht näher dargestellten Spindel verbunden sind, wobei die Spindeln mit den Oberschienen 3 verbunden sind. D. h., der Elektromotor 2 überträgt ein Drehmoment über drehbare Wellen 4.1, 4.2 zu in den Oberschienen 3 angeordneten Getriebeeinheiten (nicht näher dargestellt). Diese übertragen anschließend das Drehmoment über Spindeln in eine Bewegung in eine Schienenlängsrichtung.

Der Elektromotor 2 ist beispielsweise ein Gleichstrommotor und umfasst einen drehbar gelagerten Rotor (nicht näher dargestellt), welcher sich um eine Motorachse M dreht. Der Rotor wird von einem ebenfalls nicht dargestellten Stator umgeben. Der Rotor und der Stator sind in einem gemeinsamen Elektromotorgehäuse 2.1 angeordnet. Ein jeweils stirnseitiges Ende des Elektromotorgehäuses 2.1 wird von einem Lagerschild 2.1.1, 2.1.2 in Form eines Gehäusedeckels gebildet, wobei die Lagerschilde 2.1.1, 2.1.2 jeweils eine separate Komponente darstellen können, die mit dem Elektromotorgehäuses 2.1 verbunden wird. Alternativ kann auch eines der Lagerschilde 2.1.1, 2.1.2 einteilig mit dem Elektromotorgehäuse 2.1 verbunden sein, beispielsweise mittels Tiefziehen. Des Weiteren ist an jeweils einem stirnseitigen Ende des Elektromotorgehäuses 2.1 ein Lagerzapfen 2.2.1, 2.2.2 angeordnet, welcher koaxial zur Motorachse M des Rotors angeordnet ist. Die Lagerzapfen 2.2.1, 2.2.2 ragen jeweils durch das entsprechende Lagerschild 2.1.1, 2.1.2 hindurch axial nach außen.

Zur elektrischen Energieversorgung des Elektromotors 2 ist dieser mit einem elektrischen Anschluss 2.3 versehen. Der elektrische Anschluss 2.3 ist hierbei als Stecker ausgebildet, welcher mit einem äußeren Umfang des Elektromotorgehäuses 2.1 verbunden, insbesondere verrastet, ist. Der elektrische Anschluss 2.3 ist mittels bestimmter Verbindungskomponenten mit einem Bordnetz eines Fahrzeugs verbindbar, in welchem der Sitz S angeordnet ist.

Zur Anordnung und Befestigung des Elektromotors 2 im Trägerelement 1 umfasst dieser zwei Flansche 2.4, die jeweils mit einer Durchgangsöffnung versehen sind. Über die Flansche 2.4 kann der Elektromotor 2 mit Verbindungselementen 1.1 verbunden werden, die in einer eine Aufnahmeöffnung 1.2 begrenzenden Wand des Trägerelements 1 angeordnet sind. Die Verbindungselemente 1.1 sind beispielsweise Verbindungsstifte, die durch die Durchgangsöffnungen der Flansche 2.4 hindurch geführt und anschließend fixiert werden.

Aufgrund der Flansche 2.4, die vom Lagerschild 2.1.2 des stirnseitigen Endes des Elektromotorgehäuses 2.1 radial nach außen abragen, ist ein Durchmesser des Elektromotors 2 in diesem Bereich vergrößert, so dass dazu korrespondierende Abmessungen der Aufnahmeöffnung 1.2 im Trägerelement 1 erforderlich sind.

Des Weiteren ist die Einbaulage des Elektromotors 2 bezüglich seiner Drehposition D relativ zum Trägerelement 1 fest vorgegeben, so dass eine Lage des elektrischen Anschlusses 2.3 relativ zum Trägerelement 1 ebenfalls fest vorgegeben ist.

Zur flexiblen Nutzung eines Bauraums für den Elektromotor 2 zumindest hinsichtlich dessen Drehposition D relativ zum Trägerelement 1 wird eine Befestigungsanordnung B' vorgeschlagen, die im Folgenden näher beschrieben wird.

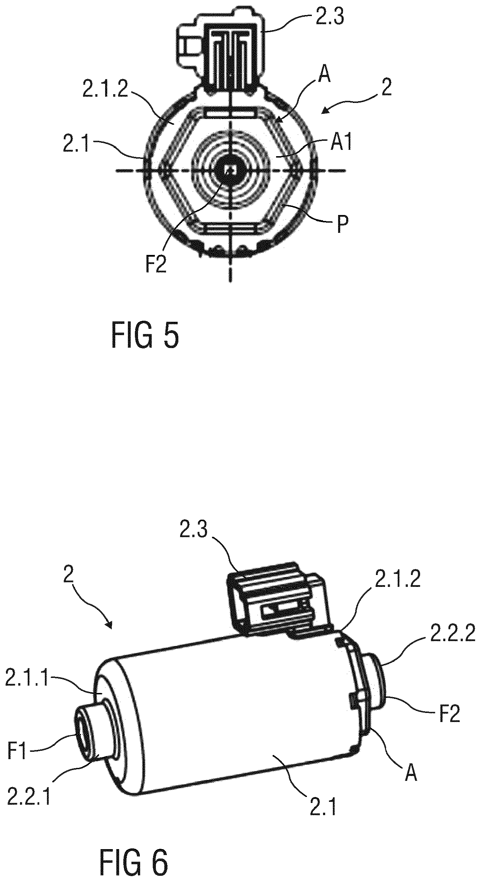

Dazu zeigen die **Figuren 4 bis 6** jeweils eine Einzelansicht eines Ausführungsbeispiels eines Elektromotors 2.

Die Befestigungsanordnung B' weist zwei Motorfixierelemente F1, F2 und ein Motorarretierelement A auf, welche am Elektromotor 2 angeordnet sind und die sich auf unterschiedlichen Schnittebenen durch die Motorachse M des Elektromotors 2 befinden. Das Motorarretierelement A ist einteilig mit dem Lagerschild 2.1.2 ausgebildet oder mit diesem verbunden. Das Motorarretierelement A ist dabei als eine Ausformung A1 ausgebildet und weist ein Polygonalprofil P auf. Gemäß dem vorliegenden Ausführungsbeispiel ist das Polygonalprofil P als ein Hexagonalprofil ausgebildet, welches axial nach außen vom Lagerschild 2.1.2 abragt. Alternativ kann das Polygonalprofil P auch radial nach innen ragen und/oder als ein Oktagonal- oder Dekagonalprofil ausgebildet sein.

Die Motorfixierelemente F1, F2 werden von den Lagerzapfen 2.2.1, 2.2.2 gebildet, mittels denen der Elektromotor 2 beidseitig am Trägerelement 1 fixierbar ist.

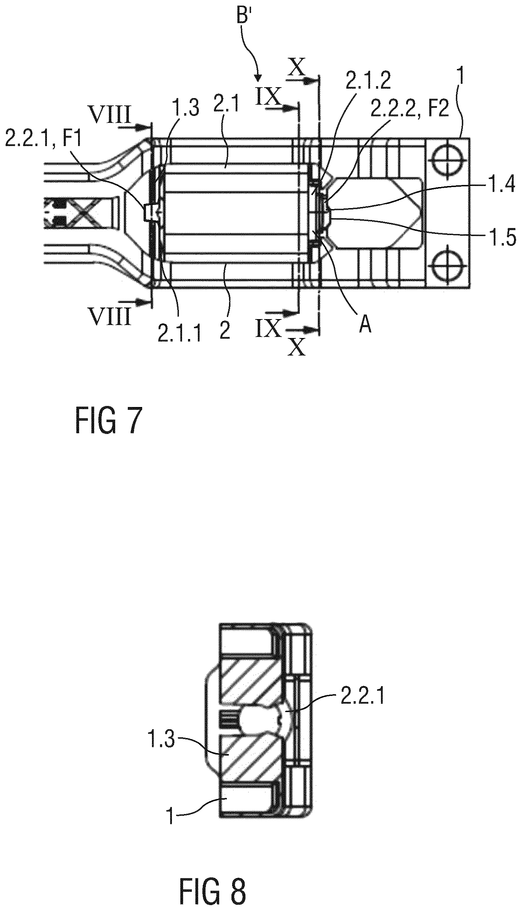

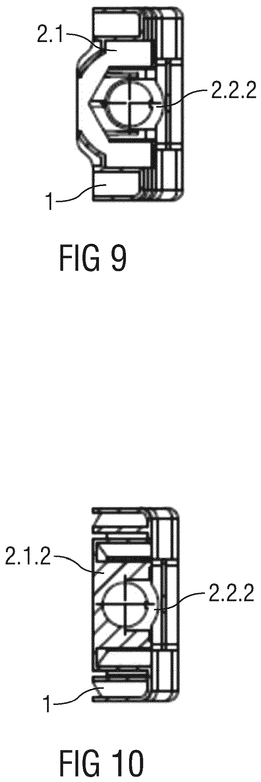

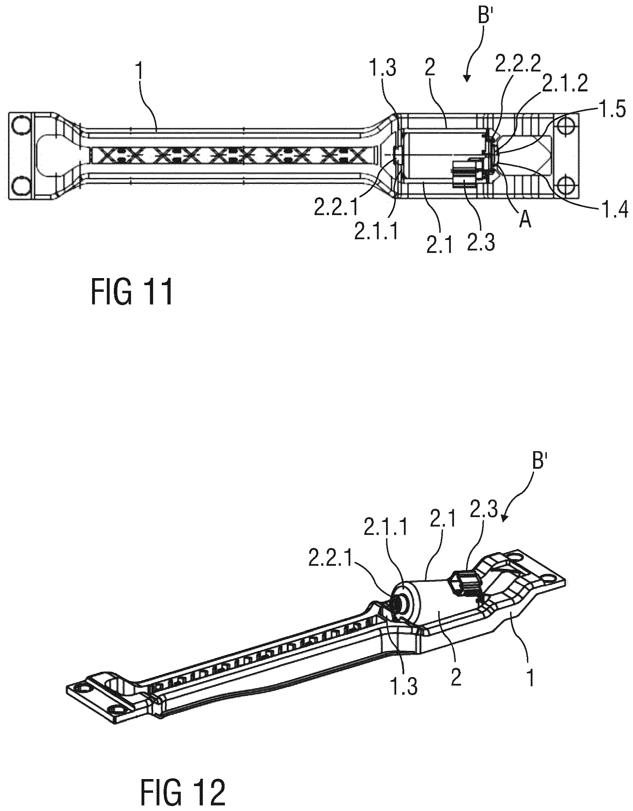

**Figur 7** zeigt einen Ausschnitt mit dem Elektromotor 2 gemäß der Beschreibung aus den Figuren 4 bis 6 und mit dem Trägerelement 1 in einem Ausführungsbeispiel in Draufsicht. Die **Figuren 8 bis 10** zeigen dazu Schnittdarstellungen, insbesondere Querschnitte, durch verschiedene Ebenen des in Figur 7 gezeigten Ausschnitts. **Figur 11** zeigt eine vollständige Ansicht des Elektromotors 2 und des Trägerelements 1 in Draufsicht.

Der Elektromotor 2 ist in der Aufnahmeöffnung 1.2 des Trägerelements 1 angeordnet, wobei die Aufnahmeöffnung 1.2 aufgrund der fehlenden Flansche 2.4 am Elektromotor 2 mit gegenüber der in den Figuren 1 bis 3 gezeigten Aufnahmeöffnung 1.2 verringerten Abmessungen ausgebildet ist.

Mittels der Motorfixierelemente F1, F2 ist der Elektromotor 2 mit dem Trägerelement 1 reibschlüssig und formschlüssig verbunden. Dazu umfasst die Befestigungsanordnung B' korrespondierende Fixierkomponenten 1.3, 1.4, die am Trägerelement 1 angeordnet sind, wobei eine Fixierkomponente 1.3 eine Klemmöffnung zur reibschlüssigen Aufnahme des Lagerzapfens 2.2.1 aufweist und die andere Fixierkomponente 1.4 als eine Öffnung zur formschlüssigen Aufnahme des anderen Lagerzapfens 2.2.2 ausgebildet ist.

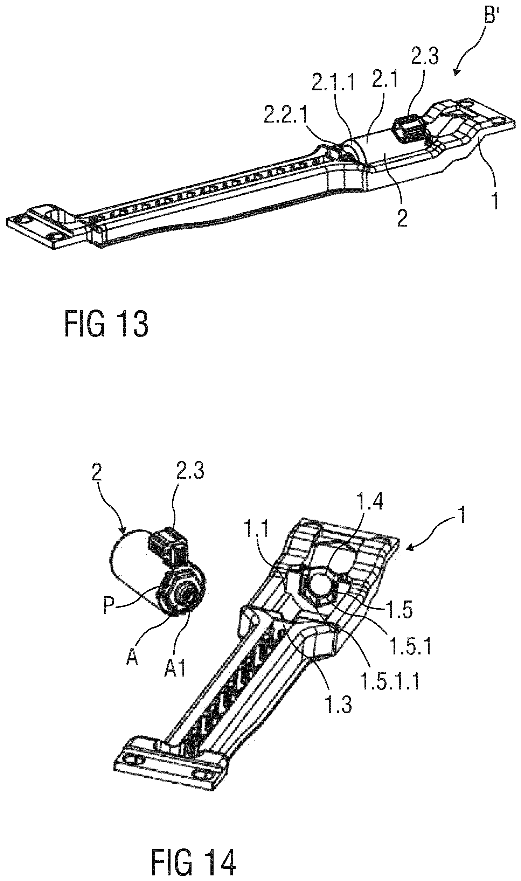

Mittels des Motorarretierelements A wird der Elektromotor 2, insbesondere das Elektromotorgehäuse 2.1, in einer bestimmten Drehposition D relativ zum Trägerelement 1 arretiert. Das Motorarretierelement A wirkt dabei mit einer korrespondierenden Arretierkomponente 1.5 zusammen, die in Figur 14 beispielhaft dargestellt ist. Hierbei weist die Arretierkomponente 1.5 ein mit einem zum Polygonalprofil P des Motorarretierelements A korrespondierenden Polygonalprofil 1.5.1 auf, welches als Aussparung 1.5.1.1 ausgebildet ist. Alternativ kann das korrespondierende Polygonalprofil 1.5.1 auch nach außen ragen, wobei das Polygonalprofil P des Motorarretierelements A nach innen ragt. Die Arretierkomponente 1.5 kann somit kosteneffektiv als ein Gegenstück in der Aufnahmeöffnung 1.2 ausgebildet werden, wobei im Trägerelement 1 bei der Herstellung keine Hinterschnitte notwendig sind. Das Trägerelement 1 kann beispielsweise mittels eines einfachen Spritzgusswerkzeugs hergestellt werden.

Das Motorarretierelement A und die Arretierkomponente 1.5 bilden im montierten Zustand des Elektromotors 2 somit eine formschlüssige, passgenaue Verbindung, wobei mehrere passgenaue Verbindungen möglich sind. Daraus resultierend sind mittels des Motorarretierelements A mehrere Drehpositionen D des elektrischen Anschlusses 2.3 des Elektromotors 2 relativ zum Trägerelement 1 möglich, wobei eine rotatorische Stufung der Drehposition D des elektrischen Anschlusses 2.3 in Einbaulage des Elektromotors 2 maximal 60° beträgt. Vorzugsweise ist eine feinere Abstufung mit weniger als 60° möglich. D. h., im konkreten Fall eines Hexagonalprofils des Motorarretierelements A kann der Elektromotor 2 und damit der elektrische Anschluss 2.3 in sechs verschiedenen Drehpositionen D relativ zum Trägerelement 1 angeordnet werden, wobei die Drehpositionen D in Bezug auf die Motorachse M des Elektromotors 2 jeweils in einem Winkel von 60° zueinander versetzt sind.

Dadurch, dass das Motorarretierelement A mit der Arretierkomponente 1.5 eine passgenaue Verbindung eingeht, dient das Motorarretierelement A insbesondere als eine Drehmomentsperre zur Kompensation eines Abstützmoments des Elektromotors 2 bei einer so genannten Blockfahrt. Eine Blockfahrt tritt hierbei auf, wenn die dem Elektromotor 2 zugeordnete Oberschiene 3 einen mechanischen Anschlag erreicht.

Zur Montage des Elektromotors 2 kann dieser in einem ersten Schritt mittels des Motorfixierelements F2 am Trägerelement 1 vorfixiert werden, wobei der Lagerzapfen 2.2.2 in der Fixierkomponente 1.4 formschlüssig angeordnet wird. Vor der Vorfixierung des Elektromotors 2 wird eine gewünschte Drehposition D des Elektromotors 2 relativ zum Trägerelement 1 gewählt und der Elektromotor 2 mit dem Motorarretierelement A entsprechend in der Arretierkomponente 1.5 angeordnet. Beim Anordnen des Motorarretierelements A in der Arretierkomponente 1.5 wird gleichzeitig das Motorfixierelement F2 in der Fixierkomponente 1.4 angeordnet. Diesen ersten Schritt zeigt **Figur 12** in einer perspektivischen Darstellung.

In einem zweiten Schritt, welcher perspektivisch in **Figur 13** gezeigt ist, erfolgt eine endgültige Fixierung des Elektromotors 2, wobei der Lagerzapfen 2.2.1 in die Klemmöffnung der Fixierkomponente 1.3 gedrückt wird, so dass das Motorfixierelement F1 und die Fixierkomponente 1.3 reibschlüssig miteinander verbunden sind.

**Figur 14** zeigt perspektivisch einen Ausschnitt mit dem Trägerelement 1 und dem Elektromotor 2 im nicht verbundenen Zustand, wobei die Arretierkomponente 1.5 näher dargestellt ist.

**Figur 15** zeigt perspektivisch die Längsverstellereinheit L mit dem Trägerelement 1, dem Elektromotor 2 und zwei Oberschienen 3 des Sitzes S.

**Figur 16** zeigt einen Sitz S mit einer Längsverstellereinheit L in einer vereinfachten Darstellung.

### Bezugszeichenliste

- 1: Trägerelement
- 1.1: Verbindungselement
- 1.2: Aufnahmeöffnung
- 1.3, 1.4: Fixierkomponente
- 1.5: Arretierkomponente
- 1.5.1: korrespondierendes Polygonalprofil
- 1.5.1.1: Aussparung
- 2: Elektromotor
- 2.1: Elektromotorgehäuse
- 2.1.1, 2.1.2: Lagerschild
- 2.2.1, 2.2.2: Lagerzapfen
- 2.3: elektrischer Anschluss
- 2.4: Flansch
- 3: Oberschiene
- 4.1, 4.2: Welle
- 5: Unterschiene

- A: Motorarretierelement
- A1: Ausformung
- B, B': Befestigungsanordnung
- D: Drehposition
- F1, F2: Motorfixierelement
- L: Längsverstellereinheit
- M: Motorachse
- P: Polygonalprofil
- S: Sitz

## Patentansprüche

1. Elektromotor (2) mit einer Befestigungsanordnung (B'), insbesondere zur Befestigung des Elektromotors (2) an einem Sitz (S), wobei die Befestigungsanordnung (B')
- mindestens ein Motorfixierelement (F1, F2) und
- mindestens ein Motorarretierelement (A), wobei das mindestens eine Motorfixierelement (F1, F2) und das Motorarretierelement (A) an einer Stirnseite des Elektromotors (2) angeordnet sind, umfasst,
wobei das mindestens eine Motorfixierelement (F1, F2) derart ausgebildet ist, dass der Elektromotor (2) in eine Drehposition (D) stellbar ist, und das mindestens eine Motorarretierelement (A) derart ausgebildet ist, dass der Elektromotor (2) in einer eingestellten Drehposition (D) arretierbar ist,
wobei das Motorarretierelement (A) derart ausgebildet ist, dass der Elektromotor (2) in axialer Richtung unverschiebbar festlegbar und mittels einer Drehmomentsperre gegen Verdrehung sicherbar ist, wobei das mindestens eine Motorarretierelement (A) ein Polygonalprofil (P) aufweist,
wobei das Außenprofil des Motorarretierelements (A) mehrere über den Umfang gleichmäßig verteilte Flächen aufweist, die die Form eines Polygons bilden,
wobei sich das Motorfixierelement (F1, F2) in axialer Richtung nach außen ausgehend vom Motorarretierelement (A) erstreckt und wobei das Motorfixierelement (F1, F2) eine Steckverbindung des Elektromotors (2) ermöglicht und das Außenprofil des Motorarretierelements (A) die Drehmomentsperre bildet.

2. Elektromotor (2) nach Anspruch 1, wobei das mindestens eine Motorfixierelement (F2) und das Motorarretierelement (A) koaxial zueinander angeordnet sind.

3. Elektromotor (2) nach Anspruch 1 oder 2, wobei das Motorfixierelement (F2) derart ausgebildet ist, dass der Elektromotor (2) in axialer Richtung unverschiebbar festgelegt und in eine von mehreren Drehpositionen (D) stellbar ist.

4. Elektromotor (2) nach einem der vorhergehenden Ansprüche, wobei das mindestens eine Motorarretierelement (A) als eine stirnseitig am Elektromotor (2) angeordnete und axial von einem Lagerschild (2.1.2) eines Elektromotorgehäuses (2.1) abragende Ausformung (A1) ausgebildet ist.

5. Elektromotor (2) nach einem der vorhergehenden Ansprüche, wobei zwei Motorfixierelemente (F1, F2) vorgesehen sind.

6. Elektromotor (2) nach einem der vorhergehenden Ansprüche, wobei das oder die Motorfixierelemente (F1, F2) jeweils mittels eines durch ein Lagerschild (2.1.1, 2.1.2) eines Elektromotorgehäuses (2.1) hindurchgeführten, axial nach außen ragenden Lagerzapfens (2.2.1, 2.2.2) gebildet ist bzw. sind.

7. Sitz (S) mit einem Elektromotor (2) mit einer Befestigungsanordnung (B') zur Befestigung des Elektromotors (2) am Sitz (S),
wobei die Befestigungsanordnung (B')
- mindestens ein Motorfixierelement (F1, F2) und
- mindestens ein Motorarretierelement (A), umfasst, wobei das mindestens eine Motorfixierelement (F1, F2) und das Motorarretierelement (A) an einer Stirnseite des Elektromotors (2) angeordnet sind,
wobei das mindestens eine Motorfixierelement (F1, F2) derart ausgebildet ist, dass der Elektromotor (2) in eine Drehposition (D) stellbar ist, und das mindestens eine Motorarretierelement (A) derart ausgebildet ist, dass der Elektromotor (2) in einer eingestellten Drehposition (D) arretierbar ist,
wobei das Motorarretierelement (A) derart ausgebildet ist, dass der Elektromotor (2) in axialer Richtung unverschiebbar festlegbar und mittels einer Drehmomentsperre gegen Verdrehung sicherbar ist, wobei das mindestens eine Motorarretierelement (A) ein Polygonalprofil (P) aufweist, und
wobei das Außenprofil des Motorarretierelements (A) mehrere über den Umfang gleichmäßig verteilte Flächen aufweist, die die Form eines Polygons bilden,
wobei sich das Motorfixierelement (F1, F2) in axialer Richtung nach außen ausgehend vom Motorarretierelement (A) erstreckt und wobei das Motorfixierelement (F1, F2) eine Steckverbindung des Elektromotors (2) ermöglicht und das Außenprofil des Motorarretierelements (A) die Drehmomentsperre bildet, und wobei die Befestigungsanordnung (B')
- mindestens eine zum Motorfixierelement (F1, F2) korrespondierende Fixierkomponente (1.3, 1.4) und
- mindestens eine zum Motorarretierelement (A) korrespondierende Arretierkomponente (1.5) umfasst, und
wobei die Fixierkomponente (1.3, 1.4) und die Arretierkomponente (1.5) jeweils am Sitz (S) angeordnet sind, und
wobei der Elektromotor (2) mittels des mindestens einen Motorarretierelements (A) und der mindestens einen korrespondierenden Arretierkomponente (1.5) hinsichtlich einer Drehposition (D) des Elektromotors (2) flexibel relativ zum Sitz (S) anordenbar und in der eingestellten Drehposition (D) arretierbar ist.

8. Sitz (S) nach Anspruch 7, **dadurch gekennzeichnet, dass** der Elektromotor (2) mittels eines an einer Abtriebsseite des Elektromotors (2) angeordneten Motorfixierelements (F1) über eine form- oder reibschlüssige Verbindung am Sitz (S) fixierbar ist.

9. Sitz (S) nach Anspruch 8, **dadurch gekennzeichnet, dass** der Elektromotor (2) zusätzlich mittels eines an einer anderen Abtriebsseite des Elektromotors (2) angeordneten Motorfixierelements (F2) über eine formschlüssige Verbindung am Sitz (S) fixierbar ist.

10. Sitz (S) nach einem der Ansprüche 7 bis 9, **dadurch gekennzeichnet, dass** die mindestens eine Fixierkomponente (1.3, 1.4) und die mindestens eine Arretierkomponente (1.5) an einem Trägerelement (1) einer Längsverstellereinheit (L) des Sitzes (S) angeordnet sind.

## Claims

1. Electric motor (2) with a fastening arrangement (B'), in particular for fastening the electric motor (2) to a seat (S), wherein the fastening arrangement (B') comprises
- at least one motor fixing element (F1, F2) and
- at least one motor locking element (A), wherein the at least one motor fixing element (F1, F2) and the motor locking element (A) are arranged on an end face of the electric motor (2),
wherein the at least one motor fixing element (F1, F2) is configured such that the electric motor (2) can be adjusted into a rotational position (D), and the at least one motor locking element (A) is configured such that the electric motor (2) can be locked in a set rotational position (D),
wherein the motor locking element (A) is configured such that the electric motor (2) can be fixed so as to be immovable in an axial direction and can be secured against twisting by means of a torque lock, wherein the at least one motor locking element (A) has a polygonal profile (P),
wherein the outer profile of the motor locking element (A) has multiple surfaces which are distributed uniformly over the periphery and form the shape of a polygon,
wherein the motor fixing element (F1, F2) extends outwardly in an axial direction starting from the motor locking element (A), and wherein the motor fixing element (F1, F2) allows a push-fit connection of the electric motor (2), and the outer profile of the motor locking element (A) forms a torque lock.

2. Electric motor (2) according to Claim 1, wherein the at least one motor fixing element (F2) and the motor locking element (A) are arranged coaxially to each other.

3. Electric motor (2) according to Claim 1 or 2, wherein the motor fixing element (F2) is configured such that the electric motor (2) is fixed so as to be immovable in an axial direction and is adjustable into one of a plurality of rotational positions (D).

4. Electric motor (2) according to any of the preceding claims, wherein the at least one motor locking element (A) is formed as a protrusion (A1) which is arranged on the end face of the electric motor (2) and protrudes axially from an end shield (2.1.2) of an electric motor housing (2.1).

5. Electric motor (2) according to any of the preceding claims, wherein two motor fixing elements (F1, F2) are provided.

6. Electric motor (2) according to any of the preceding claims, wherein the motor fixing element(s) (F1, F2) are each formed by a bearing journal (2.2.1, 2.2.2) which protrudes axially outwardly and is guided through an end shield (2.1.1, 2.1.2) of an electric motor housing (2.1).

7. Seat (S) having an electric motor (2) with a fastening arrangement (B') for fastening the electric motor (2) to the seat (S), wherein the fastening arrangement (B') comprises
- at least one motor fixing element (F1, F2) and
- at least one motor locking element (A), wherein the at least one motor fixing element (F1, F2) and the motor locking element (A) are arranged on an end face of the electric motor (2),
wherein the at least one motor fixing element (F1, F2) is configured such that the electric motor (2) can be adjusted into a rotational position (D), and the at least one motor locking element (A) is configured such that the electric motor (2) can be locked in a set rotational position (D),
wherein the motor locking element (A) is configured such that the electric motor (2) can be fixed so as to be immovable in an axial direction and can be secured against twisting by means of a torque lock, wherein the at least one motor locking element (A) has a polygonal profile (P), and
wherein the outer profile of the motor locking element (A) has multiple surfaces which are distributed uniformly over the periphery and form the shape of a polygon,
wherein the motor fixing element (F1, F2) extends outwardly in an axial direction starting from the motor locking element (A), and wherein the motor fixing element (F1, F2) allows a push-fit connection of the electric motor (2), and the outer profile of the motor locking element (A) forms the torque lock, and wherein the fastening arrangement (B') comprises
- at least one fixing component (1.3, 1.4) corresponding to the motor fixing element (F1, F2), and
- at least one locking component (1.5) corresponding to the motor locking element (A), and
wherein the fixing component (1.3, 1.4) and the locking component (1.5) are each arranged on the seat (S), and
wherein by means of the at least one motor locking element (A) and the at least one corresponding locking component (1.5), the electric motor (2) can be arranged flexibly relative to the seat (S) with regard to a rotational position (D) of the electric motor (2) and can be locked in the set rotational position (D).

8. Seat (S) according to Claim 7, **characterized in that** by means of a motor fixing element (F1) arranged on an output side of the electric motor (2), the electric motor (2) can be fixed to the seat (S) via a form-fit or friction-fit connection.

9. Seat (S) according to Claim 8, **characterized in that** the electric motor (2) can also be fixed to the seat (S) via a form-fit connection by means of a motor fixing element (F2) arranged on another output side of the electric motor (2).

10. Seat (S) according to any of Claims 7 to 9, **characterized in that** the at least one fixing component (1.3, 1.4) and the at least one locking component (1.5) are arranged on a carrier element (1) of a length adjustment unit (L) of the seat (S).

## Revendications

1. Moteur électrique (2) comprenant un ensemble de fixation (B'), destiné notamment à fixer le moteur électrique (2) à un siège (S), l'ensemble de fixation (B') comprenant
- au moins un élément de fixation de moteur (F1, F2) et
- au moins un élément de blocage de moteur (A), l'au moins un élément de fixation de moteur (F1, F2) et l'élément de blocage de moteur (A) étant disposés sur un côté frontal du moteur électrique (2),
l'au moins un élément de fixation de moteur (F1, F2) étant conçu de manière à pouvoir régler le moteur électrique (2) dans une position de rotation (D), et l'au moins un élément de blocage de moteur (A) étant conçu de manière à pouvoir bloquer le moteur électrique (2) dans une position de rotation réglée (D),
l'élément de blocage de moteur (A) étant conçu de manière à pouvoir fixer le moteur électrique (2) pour qu'il ne puisse pas coulisser dans la direction axiale et à pouvoir l'empêcher de tourner au moyen d'un système de blocage de couple,
l'au moins un élément de blocage de moteur (A) présentant un profil polygonal (P),
le profil extérieur de l'élément de blocage de moteur (A) comportant plusieurs surfaces qui sont uniformément réparties sur la circonférence et qui confèrent la forme d'un polygone,
l'élément de fixation du moteur (F1, F2) s'étendant dans la direction axiale vers l'extérieur à partir de l'élément de blocage du moteur (A) et l'élément de fixation de moteur (F1, F2) s'étendant vers l'extérieur depuis l'élément de blocage de moteur (A) dans la direction axiale et l'élément de fixation de moteur (F1, F2) permettant une liaison par enfichage du moteur électrique (2) et le profil extérieur de l'élément de blocage de moteur (A) formant le système de blocage de couple.

2. Moteur électrique (2) selon la revendication 1, l'au moins un élément de fixation de moteur (F2) et l'élément de blocage de moteur (A) étant disposés coaxialement l'un par rapport à l'autre.

3. Moteur électrique (2) selon la revendication 1 ou 2, l'élément de fixation de moteur (F2) étant conçu de manière à pouvoir fixer le moteur électrique (2) pour qu'il ne puisse pas coulisser dans la direction axiale et à pouvoir le régler dans l'une parmi plusieurs positions de rotation (D).

4. Moteur électrique (2) selon l'une des revendications précédentes, l'au moins un élément de blocage de moteur (A) étant conçu comme une protubérance (A1) qui est disposée sur le côté frontal du moteur électrique (2) et qui fait saillie axialement d'une plaque d'appui (2.1.2) d'un boîtier de moteur électrique (2.1).

5. Moteur électrique (2) selon l'une des revendications précédentes, deux éléments de fixation de moteur (F1, F2) étant prévus.

6. Moteur électrique (2) selon l'une des revendications précédentes, l'élément ou les éléments de fixation de moteur (F1, F2) étant chacun formés au moyen d'un tourillon (2.2.1, 2.2.2) qui fait saillie axialement vers l'extérieur et qui est guidé à travers une plaque d'appui (2.1.1, 2.1.2) d'un boîtier de moteur électrique (2.1).

7. Siège (S) équipé d'un moteur électrique (2) comprenant un ensemble de fixation (B') destiné à fixer le moteur électrique (2) au siège (S),
l'ensemble de fixation (B') comprenant
- au moins un élément de fixation de moteur (F1, F2) et
- au moins un élément de blocage de moteur (A), l'au moins un élément de fixation de moteur (F1, F2) et l'élément de blocage de de moteur (A) étant disposés sur un côté frontale du moteur électrique (2),
l'au moins un élément de fixation de moteur (F1, F2) étant conçu de manière à pouvoir régler le moteur électrique (2) dans une position de rotation (D), et l'au moins un élément de blocage de moteur (A) étant conçu de manière à pouvoir bloquer le moteur électrique (2) dans une position de rotation réglée (D),
l'élément de blocage de moteur (A) étant conçu de manière à pouvoir fixer le moteur électrique (2) pour qu'il n puisse pas coulisser dans la direction axiale et à pouvoir l'empêcher de tourner au moyen d'un système de blocage de couple,
l'au moins un élément de blocage de moteur (A) présentant un profil polygonal (P), et
le profil extérieur de l'élément de blocage de moteur (A) comportant plusieurs surfaces qui sont uniformément réparties sur la circonférence et qui confèrent la forme d'un polygone,
l'élément de fixation de moteur (F1, F2) s'étendant vers l'extérieur depuis l'élément de blocage de moteur (A) dans la direction axiale et l'élément de fixation de moteur (F1, F2) permettant une liaison par enfichage du moteur électrique (2) et le profil extérieur de l'élément de blocage de moteur (A) formant le système de blocage de couple, et l'ensemble de fixation (B') comprenant
- au moins un composant de fixation (1.3, 1.4) correspondant à l'élément de blocage de moteur (F1, F2) et
- au moins un composant de blocage (1.5) correspondant à l'élément de blocage de moteur (A), et le composant de fixation (1.3, 1.4) et le composant de blocage (1.5) étant chacun disposés sur le siège (S), et
le moteur électrique (2) pouvant être disposé de manière flexible par rapport au siège (S) en termes de position de rotation (D) du moteur électrique (2) au moyen de l'au moins un élément de blocage de moteur (A) et de l'au moins un composant de blocage correspondant (1.5) et pouvant être bloqué dans la position de rotation réglée (D).

8. Siège (S) selon la revendication 7, **caractérisé en ce que** le moteur électrique (2) peut être fixé au siège (S) par une liaison par complémentarité de formes ou par friction au moyen d'un élément de fixation de moteur (F1) disposé sur un côté sortie du moteur électrique (2).

9. Siège (S) selon la revendication 8, **caractérisé en ce que** le moteur électrique (2) peut en outre être fixé au siège (S) par une liaison par complémentarité de formes au moyen d'un élément de fixation de moteur (F2) disposé sur un autre côté sortie du moteur électrique (2) .

10. Siège (S) selon l'une des revendications 7 à 9, **caractérisé en ce que** l'au moins un composant de fixation (1.3, 1.4) et l'au moins un composant de blocage (1.5) sont disposés sur un élément porteur (1) d'une unité de réglage longitudinal (L) du siège (S).
